# EUROPÄISCHE PATENTSCHRIFT

(11) **EP 0 537 723 B1**
(45) Veröffentlichungstag und Bekanntmachung des Hinweises auf die Patenterteilung: **24.05.1995**
(21) Anmeldenummer: 92117570.9
(22) Anmeldetag: 14.10.1992
(51) Int. Cl.: H02K 49/04

(54) **Rotor für eine elektromagnetische Wirbelstrombremse, insbesondere für Kraftfahrzeuge**
Rotor for an electromagnetic eddy-current brake, in particular for motor vehicles
Rotor pour un frein électromagnétique à courants de Foucault, en particulier pour véhicules automobiles

(30) Priorität: 14.10.1991 DE 4134014
(43) Veröffentlichungstag der Anmeldung: 21.04.1993
(73) Patentinhaber: PENTAR S.A., E-50180 Utebo - Zaragoza (ES)
(72) Erfinder: Taules, Carlos Maria, E-31579 Carcar - Navarra (ES)
(74) Vertreter: Müller, Eckhard, Dr.

(56) Entgegenhaltungen:
- WO-A-87/00988
- FR-A- 2 044 114
- GB-A- 540 354
- US-A- 3 026 431

## Beschreibung

Die Erfindung bezieht sich auf einen Rotor für eine elektromagnetische Wirbelstrombremse, insbesondere für Kraftfahrzeuge, mit einem bspw. als Nabe augebildeten Innenteil sowie einem konzentrisch zu diesem angeordneten und über Tragarme mit dem Innenteil verbundenen äußeren Ringteil, der eine den Polen der Magnetspulen der Wirbelstrombremse zugewandte magnetische Scheibe und eine mit axialem Abstand dazu angeordnete Jochscheibe aufweist, welche unter Bildung von Kühlkanälen mittels Stegen bzw. Kühlrippen miteinander verbunden sind.

Elektrische Wirbelstrombremsen sind als verschleißfreie Verzögerungseinrichtungen zum Abbremsen von Kraftfahrzeugen bekannt. Wie bspw. in der DE 39 08 234 A1 beschrieben, bestehen die Wirbelstrombremsen aus mehreren konzentrisch um eine Welle oder Zwischenwelle angeordnete Magnetspulen und zwei Rotorscheiben, welche sich in geringem Abstand vor den Polen der Spulen auf beiden Stirnseiten des Spulenpaketes drehen. Die Zwischenwelle ist zwischen Getriebe und Antriebsachse im Antriebswellensstrang des Fahrzeuges eingebaut, während das Spulenpaket mit seinem Spulenkörper feststehend an dem Rahmen oder Getriebe des Fahrzeuges gehalten ist. Beim Bremsvorgang werden in den sich in den Magnetfeldern der Retarderspulen drehenden Rotorscheiben Wirbelströme induziert, welche entsprechend der Lenz'schen Regel ihrer Ursache entgegenwirken und damit die Rotordrehung zu hemmen suchen. Dieses auf die Rotorscheiben ausgeübte Bremsmoment wird auf den Antriebswellenstrang übertragen, welcher seinerseits abgebremst wird.

Bei den bekannten Wirbelstrombremsen (siehe z.B. US-A-3 026 431) bestehen die Rotoren aus einem Innenring, welcher bspw. über eine Nabe mit dem Antriebswellenstrang des Fahrzeuges verbindbar ist, und einem vor den Polen der Magnetspulen rotierenden äußeren Ringteil, welcher über Tragarme mit dem Innenring verbunden ist. Der äußere Ringteil besteht aus einer den Polplatten der Retarderspulen zugewandten magnetischen Scheibe, an welcher in axialer Richtung nach außen erstreckende Kühlrippen vorgesehen sind, welche zur Bildung von Kühlkanälen durch eine im axialem Abstand zur magnetischen Scheibe angeordneten Jochscheibe abgedeckt sind. Die Rotoren mit Innenring, Tragarmen und äußerem Ringteil sind einstückig ausgebildet und bestehen häufig aus einer Stahllegierung. Es hat sich gezeigt, daß beim Anhalten des Fahrzeuges mit noch warmen Rotoren aufgrund der fehlenden Kühlluft und des fehlenden Fahrtwindes sich die Tragarme dehnen und der Rotor gegen die Polplatten der Spulen gedrückt werden kann. Die Folge ist, daß die Kardanwelle blockiert wird und das Fahrzeug erst wieder in Gang gesetzt werden kann, wenn die Rotoren abgekühlt sind und sich von den Polplatten wieder abgehoben haben. Bei einer plastischen Verformung der Rotoren kann es vorkommen, daß die Rotoren auch im abgekühlten Zustand an den Polplatten angedrückt bleiben, so daß das Fahrzeug in blockierter Stellung verharrt und der Retarder ausgetauscht oder ausgebaut werden muß.

Davon ausgehend liegt der Erfindung die Aufgabe zugrunde, einen Rotor der eingangs genannten Art dahingehend zu verbessern, daß unabhängig von dem jeweiligen Last- bzw. Wärmezustand der Rotoren diese nicht in Berührung mit den Polplatten des Spulenkörpers gelangen.

Zur Lösung der Aufgabe ist es nach der Erfindung i. w. vorgesehen, daß die sich von dem Innenteil nach radial außen erstreckenden Tragarme lediglich mit der Jochscheibe verbunden sind. Dadurch, daß die Tragarme nicht mehr mit der vor den Polen der Magnetspulen drehenden magnetischen Scheibe verbunden sind, sondern nur noch an die Jochscheibe des radial äußeren Ringteils anschließen, ist ein unmittelbarer Wärmefluß zwischen den Tragarmen und der magnetischen Scheibe unterbrochen. Die infolge der induzierten Wirbelströme einer starken Wärmebelastung ausgesetzte magnetische Scheibe kann sich ausdehnen, ohne an den Tragarmen zu zerren. Es besteht daher keine Gefahr, daß die Rotoren in Berührung mit den Polschuhen oder Polplatten der Magnetspulen treten. Die Dauerbelastung der Tragarme wird damit auf ein Minimum reduziert. Ein weiterer Vortei ist, daß die Leistungsausbeute der Wirbelstrombremse höher ist, da der erfindungsgemäße Rotor ein geringeres Spaltmaß zu den Polschuhen der Retarderspulen aufweisen kann. Durch die Verkleinerung des Spaltmasses wird die Wirkung der von den Magnetspulen herrührenden Induktionsfelder vergrößert und somit ein höherer Wirkungsgrad erzielt. Darüber hinaus ist dieses Spaltmaß einstellbar, da die Tragarme geringeren wärmeabhängigen Längenänderungen unterworfen sind. Die Tragarme selbst können in radialer Richtung gekrümmt oder auch gerade verlaufen.

Nach einer ersten Ausführungsform der Erfindung ist es vorgesehen, daß sich die Tragarme in dem Zwischenraum zwischen Jochscheibe und magnetischer Scheibe zur Jochscheibe erstrecken, wobei die Tragarme zwischen benachbarten Kühlrippen zur Jochscheibe geführt sein können.

Alternativ ist es nunmehr aber auch möglich, daß die Tragarme von radial außen an die Jochscheibe geführt sind und bspw. mittels Schraubverbindungen mit der Jochscheibe verbunden sind. Bspw. können die Schraubbolzen der Schraubverbindungen von den Tragarmen her in eine Gewindeaufnahme an oder in der magnetischen Scheibe einschraubbar sein. Hierdurch können die Kühlrippen mit Jochscheibe aus einem anderen Material als die Tragarme hergestellt werden, wie bspw. aus Aluminium, was zu einer erheblichen Gewichtsreduzierung der Rotoren führt.

Auch können die Kühlrippen in herstellungstechnisch einfacher Weise von einem zwischen der magnetischen Scheibe und der Jochscheibe eingespannten Formteil gebildet sein, ebenso wie die Kühlrippen aber auch an der Jochscheibe oder bspw. an der magnetischen Scheibe angeformt sein können.

Der erfindungsgemäße Rotor ermöglicht es auch, die magnetische Scheibe, die Kühlrippen und/oder die Jochscheibe aus unterschiedlichen Materialien herzustellen und zusammenzufügen.

Schließlich ist es durch die Erfindung auch möglich, daß sich die Kühlkanäle zwischen magnetischer Scheibe und Jochscheibe in der Ebene senkrecht zur magnetischen Scheibe von radial innen nach radial außen verjüngen. Dies kann bspw. dadurch erreicht werden, daß die Jochscheibe nicht parallel zu der magnetischen Scheibe ausgerichtet ist, sondern nach radial außen zur magnetischen Scheibe hin geneigt verläuft. Durch die Verjüngung der Kühlkanäle wird eine bessere Ansaugung und Abführung der durch die Kanäle von radial innen nach radial außen strömenden Kühlluft erreicht.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: eine mögliche Ausführungsform eines erfindungsgemäßen Rotors in einer Draufsicht,
- Figur 2: eine Schnittdarstellung des Rotors gemäß Figur 1 längs der Linie A-A,
- Figur 3: einen Ausschnitt aus dem Rotor gemäß Figur 1 in einer Querschnittdarstellung längs der Linie B-B,
- Figur 4: eine andere Ausführungsform eines erfindungsgemäßen Rotors im Teilschnitt,
- Figur 5: eine wiederum andere Ausführungsform eines erfindungsgemäßen Rotors in einer Draufsicht und
- Figur 6: einen Halbschnitt des Rotors gemäß Figur 5.

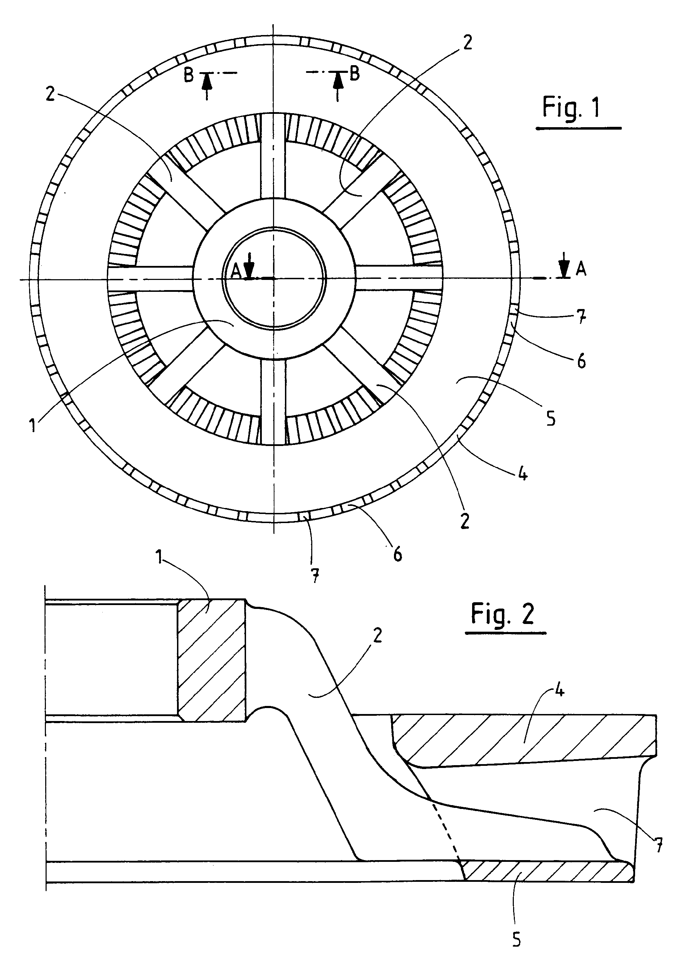

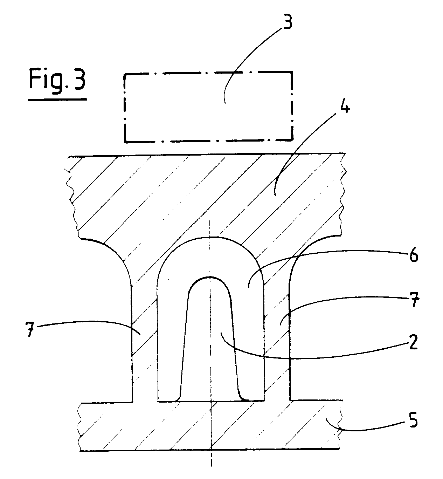

Gemäß Figuren 1 bis 3 weist der Rotoren einer elektrischen Wirbelstrombremse für Fahrzeuge einen ringförmigen Innenteil 1 auf, welcher bspw. als Nabe zum Aufstecken auf eine Kardanwelle eines Fahrzeuges ausgebildet ist. Selbstverständlich sind auch andere Ausführungsformen des Innenteils 1 zur Befestigung an dem Kardanwellenstrang des Fahrzeuges oder einer Zwischenwelle möglich. Von dem Innenteil 1 führen in radialer Richtung Tragarme 2 zu einem radial äußeren Ringteil, der eine magnetische Scheibe 4 und eine mit axialem Abstand dazu angeordnete Jochscheibe 5 aufweist. Die magnetische Scheibe 4 befindet sich mit axialem Abstand zu den in Figur 3 angedeuteten Polplatten 3 der Wirbelstrombremse. Bei einer Drehung vor den Polplatten 3 der Magnetspulen der Wirbelstrombremse werden in der magnetischen Scheibe 4 Wirbelströme induziert, wodurch das gewünschte Bremsmoment auf den Antrieb des Fahrzeuges aufgebaut wird.

Die magnetische Scheibe 4 und die Jochscheibe 5 sind unter Bildung von Kühlkanälen 6 über Kühlrippen 7 miteinander verbunden. Bei der Drehbewegung des Rotors strömt die Kühlluft von radial innen nach radial außen durch die Kühlkanäle 8.

Wie insbesondere Figuren 2 und 3 zu entnehmen, führen die Tragarme 2 lediglich zur äußeren Jochscheibe 5. Hierdurch ist der unmittelbare Wärmefluß zwischen der magnetischen Scheibe 4, in welcher die Wirbelströme induziert werden und demgemäß eine außerordentlich hohe Wärmeentwicklung auftritt, und den Tragarmen 2 unterbrochen. Der von der magnetischen Scheibe 4 ausgehende Wärmefluß wird somit i. w. nur über die Kühlrippen 7 abgeleitet. Im Falle, daß das Fahrzeuge bei zuvor betätigter Wirbelstrombremse angehalten wird, ist die an den Tragarmen 2 ankommende Wärme soweit verringert, daß nur minimale Längenänderungen der Tragarme 2 auftreten. Es besteht somit keine Gefahr, daß die Rotoren in Berühung mit den feststehenden Polplatten 3 der Magnetspulen im stationären Teil der Wirbelstrombremse gelangen.

Figur 3 zeigt einen Schnitt längs der Linie B-B gemäß Figur 1. Hier ist zu erkennen, daß die magnetische Scheibe 4 mit geringem Spaltabstand der gestrichelt dargestellten Polplatte 6 gegenübersteht. Die Tragarme 2 liegen in radialer Richtung in einem Kühlkanal 6, den die Wandungen von zwei benachbarten Kühlrippen 7 bilden. Die radialen Kühlkanäle 6 und die Kanten der Tragarme 2 sind gerundet, um Luftwirbel zu vermeiden. In Figur 1 bis 3 sind die Jochscheibe, die Tragarme 2 und die magnetische Scheibe 4 als einstückiges Teil dargestellt.

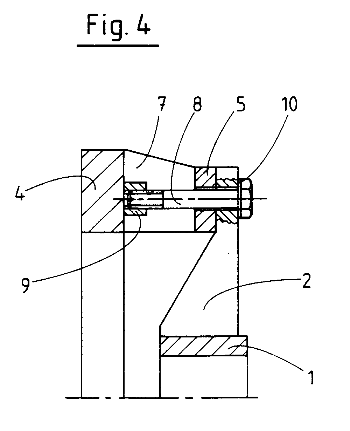

Figur 4 zeigt eine andere Ausführungsform eines Rotors, wobei die den in Figuren 1 bis 3 entsprechenden Funktionsteile mit gleichen Bezugszeichen versehen sind, so daß insoweit auf eine Beschreibung im einzelnen verzichtet werden kann. Wesentliches Unterscheidungsmerkmal der Ausführungsform gemäß Figur 4 ist, daß die Tragarme 2 an die Jochscheibe 5 auf ihrer der magnetischen Scheibe (4) abgewandten Seite führen und über eine Schaubverbindung mit der Jochscheibe 5 verbunden sind. Hierfür sind Schraubbolzen 8 mit Unterlegscheiben 10 vorgesehen, welche von den Tragarmen 2 her in eine Gewindeaufnahme 9 an der magnetischen Scheibe 5 einschraubbar sind. Hierdurch ist es möglich, die einzelen Bauteile des Rotors aus unterschiedlichen Materialien herzustellen und den Rotor aus den einzelnen Bauteilen zu komplementieren. So können die Kühlrippen 7 als Formteil ausgebildet sein und zusammen mit der Jochscheibe 5 zwischen der magnetischen Scheibe 4 und den Tragarmen 2 eingespannt sein. Selbstverständlich ist es auch möglich, daß der Schraubbolzen 8 in eine in der magnetischen Scheibe 4 selbst vorgesehene Gewindeaufnahme einschraubbar ist.

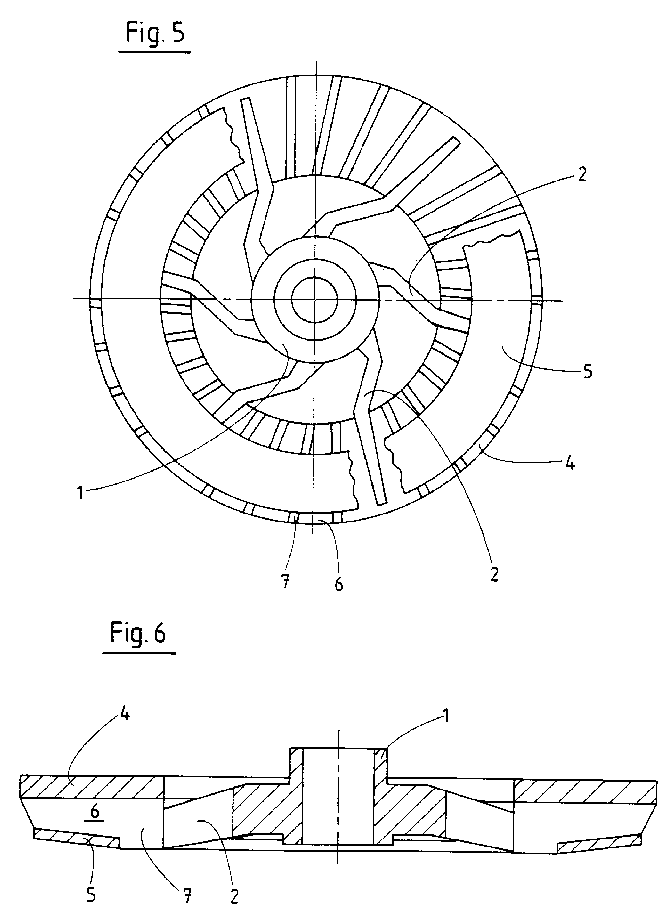

Bei der Ausführungsvariante gemäß Figuren 5 und 6 sind die Tragarme 2 im Gegensatz zu der Ausführungsform gemäß Figur 1 in radialer Richtung gekrümmt, was das Wärmeverhalten der Rotoren begünstigt. Wesentlich bei diesem Ausführungsbeispiel ist, daß, wie insbesondere Figur 6 zu entnehmen, sich die Kühlkanäle 6 zwischen magnetischer Scheibe 4 und Jochscheibe 5 in der Ebene senkrecht zur magnetischen Scheibe von radial innen nach radial außen verjüngen. Hierdurch wird eine verbesserte Durchströmung der Kühlkanäle 6 zwischen den Kühlrippen 7 erreicht, wodurch die Kühlluft besser an die Jochscheibe 5 und die magnetische Scheibe 4 herangeführt und abgeführt wird. Bei dem hier gewählten Ausführungsbeispiel wird die Verjüngung der Kühlkanäle 6 dadruch erreicht, daß die Jochscheibe 5 nicht mehr parallel zur magnetischen Scheibe 4 ausgerichtet ist, sondern nach radial außen zur magnetischen Scheibe 4 hin geneigt ist.

### Bezugszeichenliste

- 1: - Innenteil, Nabe
- 2: - Tragarm
- 3: - Polplatte
- 4: - magnetische Scheibe
- 5: - Jochscheibe
- 6: - Kühlkanal
- 7: - Kühlrippe
- 8: - Schraubbolzen
- 9: - Gewindeaufnahme
- 10: - Unterlegscheibe

## Patentansprüche

1. Rotor für eine elektromagnetische Wirbelstrombremse, insbesondere für Kraftfahrzeuge, mit einem bspw. als Nabe ausgebildeten Innenteil (1) und einem konzentrisch zu diesem angeordneten und mittels Tragarmen (2) mit dem Innenteil (1) verbundenen äußeren Ringteil, der eine den Polen (3) der Magnetspulen der Wirbelstrombremse zugewandte magnetische Scheibe (4) und eine mit axialem Abstand dazu angeordnete Jochscheibe (5) aufweist, welche unter Bildung von Kühlkanälen (6) über Kühlrippen (7) miteinander verbunden sind, dadurch gekennzeichnet, daß die sich von dem Innenteil (1) nach radial außen erstreckenden Tragarme (2) lediglich mit der Jochscheibe (5) verbunden sind.

2. Rotor nach Anspruch 1, dadurch gekennzeichnet, daß sich die Tragarme (2) in dem Zwischenraum zwischen Jochscheibe (5) und magnetischer Scheibe (4) zur Jochscheibe (5) erstrecken.

3. Rotor nach Anspruch 1 oder 2, dadurch gekennzeichnet, daß die Tragarme (2) zwischen benachbarten Kühlrippen (7) zur Jochscheibe (5) geführt sind.

4. Rotor nach Anspruch 1, dadurch gekennzeichnet, daß die Tragarme (2) an die Jochscheibe (5) auf ihrer der magnetischen Scheibe (4) abgewandten Seite geführt sind.

5. Rotor nach einem der Ansprüche 1 bis 4, dadurch gekennzeichnet, daß die Tragarme (2) mittels Schraubverbindungen mit der Jochscheibe (5) verbunden sind.

6. Rotor nach Anspruch 5, dadurch gekennzeichnet, daß die Schraubbolzen (8) der Schraubverbindungen von dem Tragarmen (2) her in eine Gewindeaufnahme (9) an oder in der magnetischen Scheibe (5) einschraubbar sind.

7. Rotor nach einem der Ansprüche 1 bis 6, dadurch gekennzeichnet, daß die Kühlrippen (7) von einem zwischen der magnetischen Scheibe (4) und der Jochscheibe (5) eingespannten Formteil gebildet sind.

8. Rotor nach einem der Ansprüche 1 bis 7, dadurch gekennzeichnet, daß die Kühlrippen (7) an der Jochscheibe (5) angeformt sind.

9. Rotor nach einem der Ansprüche 1 bis 8, dadurch gekennzeichnet, daß magnetische Scheibe (4), Kühlrippen (7) und/oder Jochscheibe (5) aus unterschiedlichen Materialien bestehen.

10. Rotor nach einem der vorhergehenden Ansprüche, dadurch gekennzeichnet, daß sich die Kühlkanäle (6) zwischen magnetischer Scheibe (4) und Jochscheibe (5) in der Ebene senkrecht zur magnetischen Scheibe (4) von radial innen nach radial außen verjüngen.

## Claims

1. Rotor for electromagnetic eddy current brake, especially for motor vehicles, comprising an inner part (1), for example constructed as a hub, and an outer annular part which is arranged concentrically of the inner part (1) and connected therewith by means of support arms (2) and which has a magnetic disc (4), which faces the poles (3) of the magnet core of the eddy current brake, and a yoke disc (5), which is arranged at an axial spacing therefrom, the discs being connected together by way of cooling ribs (7) while forming cooling channels (6), characterised thereby that the support arms (2), extending radially outwardly from the inner part (1), are connected merely with the yoke disc (5).

2. Rotor according to claim 1, characterised thereby that the support arms (2) extend in the intermediate space between yoke disc (5) and magnetic disc (4).

3. Rotor according to claim 1 or 2, characterised thereby that the support arms (2) are led between adjacent cooling ribs (7) to the yoke disc (5).

4. Rotor according to claim 1, characterised thereby that the support arms (2) are led to the yoke disc (5) on the side thereof facing away from the magnetic disc (4).

5. Rotor according to one of claims 1 to 4, characterised thereby that the support arms (2) are connected with the yke disc (5) by means of screw connections.

6. Rotor according to claim 5, characterised thereby that the screw bolts (8) of the screw connections are screwable from the support arms (2) into a threaded receptacle (9) at or in the magnetic disc (5).

7. Rotor according to one of claims 1 to 6, characterised thereby that the cooling ribs (7) are formed by a shaped part clamped in between the magnetic disc (4) and the yoke disc (5).

8. Rotor according to one of claims 1 to 7, characterised thereby that the cooling ribs (7) are shaped on at the yoke disc (5).

9. Rotor according to one of claims 1 to 8, characterised thereby that magnetic disc (4), cooling ribs (7) and/or yoke disc (5) consist of different materials.

10. Rotor according to one of the preceding claims, characterised thereby that the cooling channels (6) between magnetic disc (4) and yoke disc (5) narrow from radially inwardly to radially outwardly in the plane normal to the magnetic disc (4).

## Revendications

1. Rotor pour frein électromagnétique à courant de Foucault, en particulier pour des véhicules comprenant une partie intérieure (1) affectant par exemple la forme d'un moyeu, et une partie extérieure annulaire reliée au moyen de bras (2) à la partie intérieure (1), concentrique à celle-ci, et qui présente un disque magnétique (4) tourné vers les pâles (3) des bobines magnétiques du frein à courant de Foucault et un disque de culasse (5) placé à une distance axiale du disque (4), lesquels disques étant reliés l'un à l'autre par l'intermédiaire d'ailettes de refroidissement (7) en formant des canaux de refroidissement (6), caractérisé en ce que les bras s'étendant vers l'extérieur dans le sens radial depuis la partie intérieure (1) ne sont reliés qu'au disque de culasse (5).

2. Rotor selon la revendication 1, caractérisé en ce que les bras (2) s'étendent dans l'espace entre le disque de culasse (5) et le disque magnétique (4) en direction du disque de culasse (5).

3. Rotor selon la revendication 1 ou 2, caractérisé en ce que les bras (2) passent entre des ailettes de refroidissement (7) voisines en direction du disque de culasse (5).

4. Rotor selon la revendication 1, caractérisé en ce que les bras (2) aboutissent contre le disque de culasse (5) par leur extrémité opposée au disque magnétique (4);

5. Rotor selon l'une des revendications 1 à 4, caractérisé en ce que les bras (2) sont reliés au disque de culasse (5) au moyen d'assemblages vissés.

6. Rotor selon la revendication 5, caractérisé en ce que les goujons filetés (8) des assemblages vissés se vissent depuis les bras (2) dans un logement fileté (9) ou dans le disque magnétique (5).

7. Rotor selon l'une des revendications 1 à 6, caractérisé en ce que les ailettes de refroidissement (7) sont formées d'une pièce moulée emboîtée entre le disque magnétique (4) et le disque de culasse (5).

8. Rotor selon l'une des revendications 1 à 7, caractérisé en ce que les ailettes (7) de refroidissement sont formées sur le disque de culasse (5).

9. Rotor selon l'une des revendications 1 à 8, caractérisé en ce que le disque magnétique (4), les ailettes de refroidissement (7) et/ou le disque de culasse (5) sont constitués de matériaux différents.

10. Rotor selon l'une des revendications précédentes, caractérisé en ce que les canaux de refroidissement (6) entre le disque magnétique (4) et le disque de culasse (5) s'effilent depuis l'intérieur vers l'extérieur dans le sens radial dans le plan perpendiculaire au disque magnétique (4).
